# EUROPEAN PATENT SPECIFICATION

(11) **EP 1 856 392 B1**
(45) Date of publication and mention of the grant of the patent: **28.12.2011**
(21) Application number: 06701655.0
(22) Date of filing: 27.01.2006
(51) Int. Cl.: F02D 41/30, F02B 43/00, F02M 21/02

(54) **GASEOUS FUEL DIRECT INJECTION SYSTEM**
DIREKTEINSPRITZSYSTEM FÜR GASFÖRMIGEN KRAFTSTOFF
SYSTEME D'INJECTION DIRECTE DE COMBUSTIBLE GAZEUX

(30) Priority: 27.01.2005 AU 2005900334
(43) Date of publication of application: 21.11.2007
(73) Proprietor: Orbital Australia PTY Ltd., Balcatta, WA 6021 (AU)
(72) Inventor: CALEY, David, James, City Beach, W.A. 6015 (AU); CATHCART, Geoffrey, Paul, Menora, W.A. 6050 (AU); PALUCH, John, William, Mount Claremont, W.A. 6010 (AU)
(74) Representative: Lerwill, John
(86) International application number: PCT/AU2006/000098
(87) International publication number: WO 2006/079173

(56) References cited:
- WO-A-02/48521
- US-A- 5 329 908
- US-A- 5 351 656
- US-A- 5 367 999
- US-A- 5 771 857
- US-A- 5 771 857
- US-A- 6 161 525
- US-A1- 2004 250 797
- US-A1- 2005 241 625
- PATENT ABSTRACTS OF JAPAN & JP 2004 353458 A (TOYOTA MOTOR CORPORATION) 16 December 2004
- PATENT ABSTRACTS OF JAPAN & JP 2005 273577 A (NISAN DIESEL MOTOR CO. LTD) 06 October 2005

## Description

This invention relates to a direct fuel injection system for internal combustion engines using gaseous fuels.

Gaseous fuels refer to both compressed gas fuels such as compressed natural gas (CNG), hydrogen (H₂) and liquefied petroleum gas (LPG).

There are numerous potential advantages in using gaseous fuels in engines in place of the more commonly used liquid fuels. For example, it is well appreciated that the undesirable exhaust emissions from an engine using a gaseous fuel can be lower than for a comparable engine using liquid fuel. Further, at the present time, the use of certain gaseous fuels can translate into a significant cost saving for the user due to the per litre cost thereof as compared to the per litre cost of the commonly used liquid fuels. Gaseous fuels are injected into diesel and spark ignited engines to achieve these advantages.

The Applicant has developed certain spark ignition, direct injection two stroke and four stroke cycle internal combustion engine technologies for example as described in United States Patent No. 4934329, the contents of which are hereby incorporated by reference. The term "direct injection refers to the use of fuel injectors for injecting fuel directly into the combustion chambers of internal combustion, engines, both spark ignited and diesel. However, the operating environment for a spark ignition direct injection engine is significantly different to that of a diesel engine. For example, modern spark ignition engines typically operate at significantly higher engine speeds than for corresponding diesel engines. Spark ignition engines therefore provide a more demanding environment for a direct injection fuel system and its associated control system than diesel engines

The Applicant's internal combustion engine technologies primarily use liquid fuel and may be applied to engines using gaseous fuels as well. For example, the Applicant's European Patient N. 760424, the contents of which are hereby incorporated by reference, discloses gaseous fuel direct injection fuel system for a spark ignition internal combustion engine, preferably being a two stroke engine. The fuel injection system initiates direct injection of gaseous fuel after closing of the inlet port and injection is completed before the compression stroke of the engine is substantially completed.

Gaseous fuel could, alternatively and as is more conventionally the case, be injected into the inlet manifold or inlet port of a reciprocating engine. Such injection displaces air resulting in reduced trapped air and reduced maximum engine torque (in the case of hydrogen gas Injection, there can be up to 30% loss in maximum engine torque due to displacement of intake air, and in the case of CNG this can be up to 10%). Direct injection of gaseous fuel into an engine cylinder after inlet port closure or during the compression stroke avoids such displacement of air but imposes strict timing limitations on the injection event. For a typical automotive four stroke engine, the fuel for full load operation should be injected in ≤4,0 msec to avoid displacement of air at high engine speeds. The fuel injection system must also provide controlled fuel metering at idle and low load operating conditions. This dynamic range of operation is beyond the capability of typical solenoid operated metering valves. Developments to increase responsiveness of the fuel injection system and the operating range of the injector, such as variable flow via variable valve lift add cost and complexity to the injector.

United States Patent No. 5771857 discloses a direct injected gas diesel engine system made more suitable for use with a fuel of natural gas by a fuel control system providing variable gas pressure control. A variable gas pressure regulator under the control of the engine's electronic control module provides the desired gas pressure control.

United States Patent No. 5329908 discloses a natural gas injection system utilizing a fuel injector which has a gas accumulator that has a volume that is at least ten times the maximum amount of fuel injectable thereby. In a first embodiment, using a variable fuel supply, an electronic control unit (ECU) controls the injection timing to inject compressed gas into the cylinders as each piston nears its top dead centre position to obtain diesel engine like efficiencies so long as the compressed gas supply pressure is sufficiently high (at least approximately 2000 psi) and where the compressed gas supply pressure becomes too low for high efficiency operation (ie below 2000 psi), the ECU changes the manner of operation so that fuel injected into the engine when the piston is near its bottom dead centre position so that it can be pre-mixed with air prior to ignition to produce gasoline engine - like efficiencies. The fuel supply has a main gas supply comprising a plurality of gas and liquid tanks with a hydraulic pump which acts to maintain a high pressure in the gas tanks by pressurizing the gas-containing tanks with liquid that is pumped into them from the liquid-containing tank.

United States Patent No. 5367999 discloses a gaseous fuel delivery system and method to improve performance of a gaseous fuel engine by variably maintaining gaseous fuel pressure to the gaseous fuel engine. From a storage device, gaseous fuel flows to a fuel pressure regulator that variably and dynamically reduces the fuel pressure from the storage pressure and maintains the gaseous fuel pressure at the desired controlled supply pressure.

Japan Patent Application 2004-353458 is directed to a fuel supply system in which compressed natural gas (CNG) fuel is used as fuel and a regulator reduces fuel pressure to approximately atmospheric pressure and subsequently boosts such pressure by a variable boosting pump. The fuel is boosted to a specified injection pressure by the variable boosting pump based on the operating conditions of the engine.

United States Patent No. 5351656 describes an Otto cycle rotary engine with a high pressure gaseous fuel supply port and a low pressure gaseous fuel supply port respectively connected to a high pressure gaseous fuel supply system and a low pressure gaseous fuel supply system. Each fuel supply system includes a pressure adjuster and a flow control valve.

The prior art typically involves a variable fuel pressure regulator and this typically involves mechanical parts, such as diaphragms and springs, which tend to produce an inertial lag and lack of responsiveness.

It is an object of the present invention to provide improved engine performance for a gaseous fuelled engine while using conventional injectors to minimise injector complexity and fuel injection system cost.

With this object in view, the present invention provides, in one aspect, a gaseous fuel direct injection system for a spark ignition internal combustion engine comprising a combustion chamber; at least one fuel injector for directly infecting gaseous fuel into the combustion chamber, a fuel supply means for supplying gaseous fuel to the fuel injector; and a control means wherein the fuel supply means further comprises a plurality of volumes corresponding with a plurality of coexisting available fuel supply pressures at at least some operating points of the engine for gaseous fuel to be supplied to the at least one fuel injector and the control means selects an available fuel supply pressure for gaseous fuel to be supplied to the at least one fuel injector as a function of engine operating conditions.

The present invention provides, in a further aspect, a method of operating a spark ignition internal combustion engine directly injected with a gaseous fuel, the engine having a combustion chamber including at least one fuel injector for directly injecting gaseous fuel Into the combustion chamber, a fuel supply means for supplying gaseous fuel to the fuel injector and a control means wherein the fuel supply means further comprises a plurality of volumes corresponding with a plurality of coexisting available supply pressures at at least some operating points of the engine for gaseous fuel to be supplied to said at least one fuel injector and said control means selects an available supply pressure for gaseous fuel to be supplied to the at least one fuel injector as a function of engine operating conditions.

The control means allows the fuel supply means to rapidly transition between available pressures allowing rapid control over the pressure of the fuel supplied to the fuel injector. By "rapid", in this context, is meant rapid in the context of typical engine response time. A typical engine response would occur within a few cycles of engine operation, say 1 to 2 cycles of engine operation. Alternatively, the response may be measured as a time duration. In any event, the response is rapid enough to satisfy transient response times required for modern internal combustion engines.

Lags caused by mechanical parts, as experienced with prior art regulators, are reduced enabling such rapid response to occur.

The fuel supply means volumes may include a plurality of passages, having switching means for switching fuel supply between the fuel supply passages to achieve rapid transition between available fuel supply pressures dependent on engine operating conditions. Such pressures may be selected by the control means as a function of engine load and speed or operator demand.

The fuel supply means may include a first fuel supply passage or rail pressurized to a low pressure and a second fuel supply passage or rail pressurized to a high pressure, each passage or rail being connected with a pressurized fuel source such as a fuel tank. Put another way, the first fuel supply passage may be pressurized or regulated to a pressure lower than the pressure of the second fuel supply passage. Each pressure corresponds to a coexisting available pressure that may be enabled and selected by the control means dependent on engine operating conditions. One or more valves may be provided such that the injector fuel supply may be switched by the control means between first and second passages or vice versa, allowing rapid transition between the available pressures. Suitable valves for this application are on-off solenoid valves having two positions "open" and "closed". A three way solenoid valve allowing switching between supply of low pressure fuel and high pressure fuel to the injector(s) may be employed dependent on engine operating conditions.

The fuel pressure In the first and second fuel supply volumes or passages is, advantageously, separately regulated at desired pressure values, the pressure being controlled to provide a plurality of co-existing available fuel supply pressures. The first passage may be regulated at a pressure between 1.0 MPa and 1.4 MPa, for example 1.2 MPa. The second passage may be regulated at a pressure between 2.2 MPa and 2.7 MPa, for example 2.5 MPa. The lowest available pressure is selected such that the Idle fuel requirement of the engine can be delivered within the controllable operating range of the injector.

The first and second passages may be provided with sensors of properties such as temperature, pressure and/or composition, sensed data allowing compensation to be made for the pressure, temperature and/or composition of the gaseous fuel present in the fuel supply passages. The control means may provide such compensation through suitable control algorithms.

The first fuel supply passage of the fuel supply means, having pressure regulated to deliver high pressure fuel to the fuel injactor(s), may be connected both to the fuel injector(s) and, through one or more isolation valves, to the second low pressure passage of the fuel supply means. Isolation valve(s) may be of solenoid on-off type. The first fuel supply passage may be the operating fuel supply passage through which fuel is supplied to the fuel injector(s). The second fuel supply passage, having pressure regulated at a low pressure, may not be in direct communication with the fuel injector(s). Therefore, when the control means - such as an electronic control unit (ECU) - senses requirement for a transition from high pressure to low pressure operation, the valve(s) connecting the first and second fuel supply passages may be opened allowing venting of fuel from, and a rapid fall in pressure in, the first fuel supply passage, that passage then becoming capable of supplying fuel to the fuel injector(s) at the required low pressure. The second low pressure fuel supply passage may, for convenience, be of greater volume or capacity than the first fuel supply passage for delivery, when required, of high pressure fuel. The relative volumes or capacities of the first and second passages may be set so that, when venting occurs on transition from high to low pressure operation, the pressure in the first passage or rail falls to a pressure at or close to a target low pressure value. The resulting pressure should be low enough to controllably inject the idle fuel required by an engine. Closure of isolation valve(s) will result in a rapid repressurisation of the first fuel supply passage due to its relatively small volume or capacity, enabling supply of high pressure fuel to the fuel injector(s) when engine operating conditions dictate. The fuel supply passages are supplied with fuel from one or more fuel tanks, a single fuel tank being preferred, to reduce cost and complexity.

The ECU may include at least one "look up" map to determine the required operating parameters for the fuel injector(s). The ECU may control the operation of the fuel injection system as a function of operator demand, such as operator speed demand. The ECU may be configured to enable operation of the fuel injector(s) at low pressure from idle up to high engine speeds and loads at which high pressure is required to increase the injected fuel flow. The system would preferentially be operated at low pressure.

An available low pressure may also be available on sensing of an engine fault, such as low fuel tank pressure, allowing a "limp home" mode at low pressure.

The ECU may control the pressure differential across the fuel injector(s) as a way to effect the fuel: metering; this differential, being the difference between the supply pressure of the gaseous fuel and the pressure within the combustion chamber during the injection process, the pressure differential being such that the flow through the injector is not "choked" or "sonic". Such control is optional and may most advantageously be employed during low pressure operation of the injectors to provide an additional parameter for fuel metering control.

Further, it may be desirable - in some instances - to use water injection to control knock and/or NOₓ emissions. For instance, hydrogen gas combustion can cause particularly high combustion chamber temperatures which could lead to increased knock. Water injection, involving metering water into the delivery injector using a metering unit (such as described in the Applicant's United States Patent No. 4934329, the contents of which are hereby incorporated by reference), is particularly convenient. In this case, water rather than fuel is metered into the delivery injector, and the pressurized gas atomises and delivers the water to the combustion chamber for knock/NOₓ emission control. Alternatively, a further additive, such as a gas or liquid fuel, could be delivered by the metering injector. Injection of a further combustible substance, such as hydrogen, may be conducted to enhance combustion efficiency;

The gaseous fuel direct injection system may be supplemented by port injection if desired. In any event, the gaseous fuel direct injection system may be implemented in two stroke or four stroke engines of single or multi-cylinder type using any suitable gaseous fuel. The fuel injection system may operate in single fluid mode or dual fluid mode utilising compressed gas during each injection event to entrain and atomise a metered quantity of fuel for delivery into the combustion chambers of an internal combustion engine. The operating principles of one such dual fluid fuel injection-system are described in the Applicant's above referenced United States Patent No. 4934329,. The system could also be Implemented in rotary engines such as Wankel engines. Engines including the gaseous fuel direct injection system of the invention may be used in scooter, automotive and marine applications.

It will be convenient to further describe the fuel injection system of the invention with respect to the accompanying drawings that assist in describing various preferred embodiments of the present invention. Other embodiments of the invention are possible and, consequently, the description is non-limiting, being by way of example only.

In the drawings:

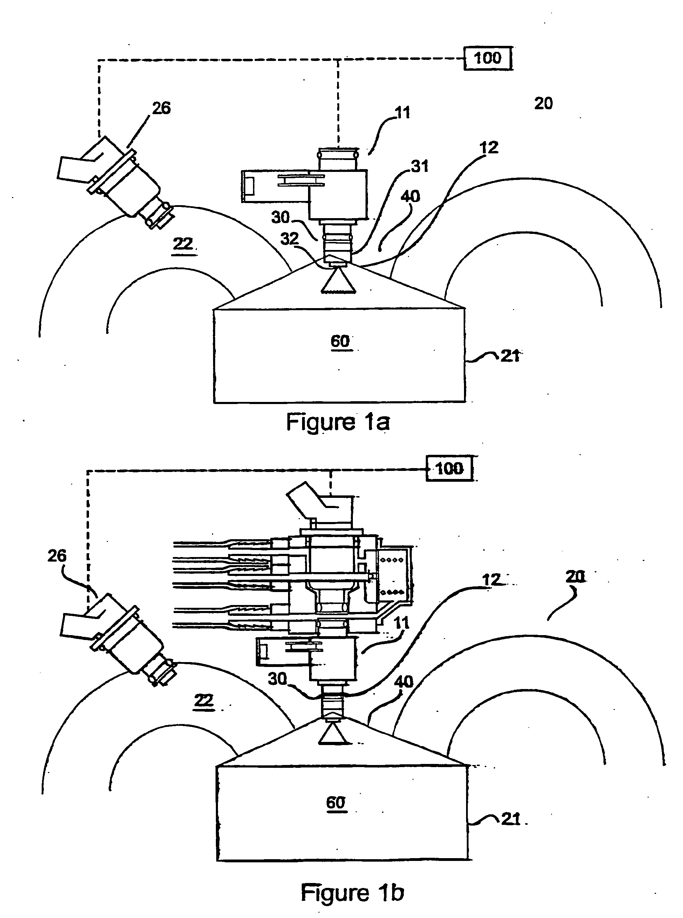

Figure 1 a Is a schematic partial cross-sectional view of an internal combustion engine having a gaseous direct fuel injection system in accordance with one embodiment of the present invention;
Figure 1 b is a schematic partial eross-sectional view of an internal combustion engine having a gaseous direct fuel injection system In accordance with the second embodiment of the present invention;
Figure 2a is a schematic of a gaseous direct fuel injection system in accordance with one embodiment of the invention;
Figure 2b is a schematic diagram of a fuel injection system and injector configured for high pressure operation of the gaseous direct fuel injection system shown in Figure 2a;
Figure 2c is a schematic diagram of a fuel injection system and injector configured for low pressure operation of the gaseous direct fuel injection system shown in Figure 2a;
Figure 3a is a schematic of a gaseous direct fuel injection system operated at high pressure in accordance with a further embodiment of the invention;
Figure 3b is a schematic of a gaseous direct fuel injection system operated at low pressure in accordance with the further embodiment of the invention; and
Figure 4 is an engine speed-engine demand characteristic for the gaseous direct fuel injection system shown in Figures 1 to 3.

Figure 1 a shows one cylinder 21 of a direct injected four stroke multi-cylinder internal combustion engine 20 comprising a fuel injection system. The engine 20 has only a spark ignition mode of operation. The cylinder 21 has a combustion chamber 60, a cylinder head 40, and an air intake manifold 22. The fuel injection system supplies gaseous fuel to the combustion chamber 60 of cylinder 21 of engine 20. Gaseous fuel is delivered into the combustion chamber 60 of the engine by the fuel injector 9. The gaseous fuel can, for example, be LPG from a storage source or fuel tank 2, tank 2 being the only source of fuel for the engine 20. A portion of the LPG is stored in the fuel tank 2 in a liquefied state whilst a gaseous portion of the LPG- is stored above the liquefied portion. The fuel tank 2 is connected to the fuel injector 9 by a fact supply means such as a fuel rail unit 11.

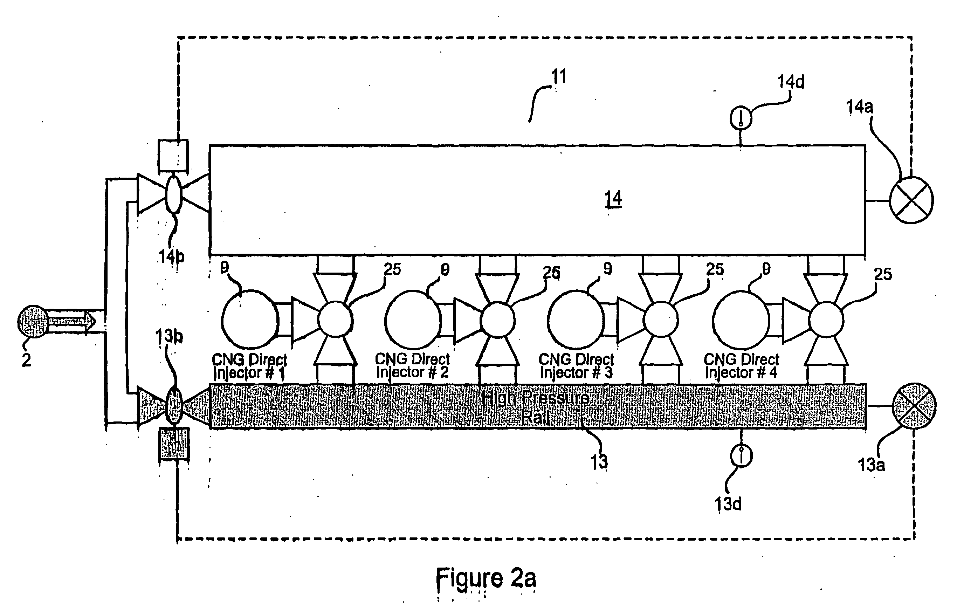

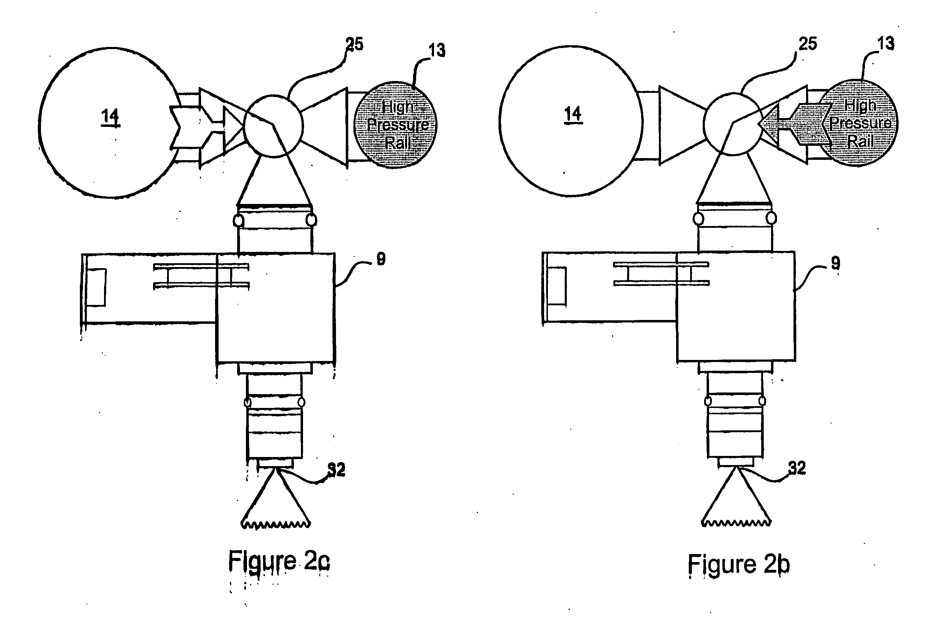

Referring now to Figures 2a and 2b, one embodiment of the fuel rail unit 11 is shown in more detail. The fuel rail unit 11 includes two fuel supply passage 13 and 14 each being supplied with gaseous fuel from fuel tank 2. Each fuel supply passage 13 and 14 is connected to a fuel injector 9 corresponding with each cylinder of the engine 20 by a solenoid valve 25. The solenoid valve 25 is a three way valve having connections with each fuel supply passage 13 and 14. The solenoid valve 25 is actuated by a control means being an electronic control unit.

The pressure in each fuel supply passage 13 and 14 is regulated by a separate regulator. The pressure in first fuel supply passage 13 is regulated at a high pressure, for example 2.50 MPa. Pressure sensor 13a is connected with a high pressure modulating control valve 13b, the position, "open" or "closed", of which Is altered in accordance with sensed pressure. That is, a pressure feedback control loop is provided for. If the sensed pressure is low, then control valve 13b is opened to pressurize first fuel supply passage 13, If the sensed pressure is high, then the control valve 13b is closed. Venting of the first fuel supply passage for pressure regulation may be provided for.

The pressure in second supply passage 14 is regulated at a low pressure, for example 1.20 MPa, using a similar control loop as provided in the case of first fuel supply passage 13. Pressure sensor 14a is connected with a low pressure modulating control valve 14b, the position "open" or "closed", of which is altered in accordance with sensed pressure. When sensed pressure reads high, then the control valve 14b is closed or second fuel supply passage 14 vented until the required low pressure is reached. If necessary, when sensed pressure reads low, the control valve 14b may be opened to allow pressurization. However, the second fuel supply passage 14 may be sized, relative to the fuel supply pressure from fuel tank 2, such that the pressure In second fuel supply passage 14 is at the required low pressure to tenable idle fuel requirement of the engine 20 to be delivered by injector(s) 9 when the control valve 14b is open allowing communication of second fuel supply passage 14 with fuel tank 2.

The fuel supply passages 13 and 14 are each provided with high pressure and temperature sensors and low pressure and temperature sensors 13d and 14d respectively, so that compensation may be made, by the electronic control unit, for pressure and temperature of the utilised LPG gas.

Each fuel injector 9 has a housing 30 with a cylindrical spigot 31 projecting from a lower end thereof, the spigot 31 defining an injection port 32 in communication with either first fuel supply passage 13 or second fuel supply passage 14 in accordance with engine operating conditions. The injection port 32 includes a solenoid operated selectively openable poppet valve (not shown) operating in a manner similar to that as described in the Applicant's United States Patent No. 4934329, the contents of which are hereby incorporated by reference, and which relates to a dual fluid injection system. A fuel metering unit is not needed for gaseous fuel operation; nevertheless a fuel metering unit 120, as described in United States Patent No. 4934329, is employed to meter water to fuel injector 9 for knock and/or NOₓ emissions control as shown in Figure 1b.

The fuel injectors 9 are controlled by the electronic control unit 100 powered by a separate electrical power supply. The electronic control unit 100 can control the duration of the opening period of each fuel injector 9 as well as the point at which each fuel injector 9 is opened during an engine cycle. The electronic control unit 100 obtains input signals from various sensors providing information on the operating conditions of the engine 20 as well as the driver demand and outputs control signals to certain engine components. The driver demand can be determined either as a load demand or a speed demand depending on the control strategy used. For example, a determination of the driver demand may be obtained from 8 throttle position sensor (not shown) which provides a drivers demand input signal to the engine control unit. Numerous other sensors are used to provide information to the electronic control unit on the operating conditions of the engine 20 so that a derived engine operating strategy may be implemented. For example, the electronic control unit 100 receives input signals rotating to the air temperature and the engine speed. The electronic control unit 100 may also receive other inputs such as crankshaft position inputs (e.g TDC pulses) depending upon the particular engine application or configuration. Conversely, the electronic control unit outputs control signals to, for example, the electronic driver of the fuel injector 9 and the solenoid valve 25 such that high pressure gas may be supplied from first fuel supply passage 13 or low pressure gas may be supplied from second fuel supply passage 14 dependent on engine operating conditions. The setting of solenoid valve 25 in high pressure mode is shown in Figure 2b. The setting of solenold valve 25 in low pressure mode is shown in Figure 2c.

The gaseous fuel quantity injected by each fuel injector 9 can be varied by maintaining the duration of the opening period of each fuel injector 9. A distinct mitering unit is not required for gaseous fuel.

Operation of an engine 20 incorporating the gaseous direct fuel injection system of the invention will now be described, it being appreciated that the electronic control unit 100 controls the operation of solenoid valve(s) 25 such that high pressure gas or low pressure gas, the two available pressures for the illustrated system, may be supplied to fuel injectors 9 in dependence on engine operating conditions.

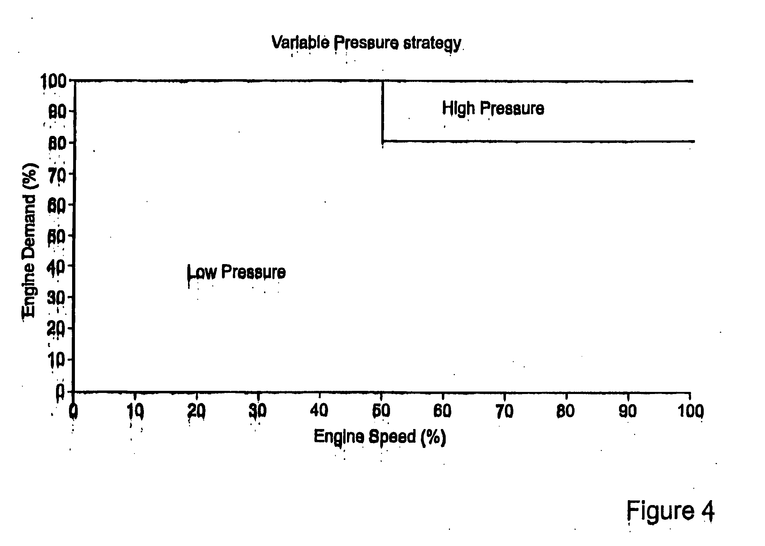

The actuation of solenoid valve(s) 25, to provide gaseous fuel at selected appropriate pressure may be effected by a suitable engine speed sensor being provided to activate a switch when the engine speed reaches a selected value at a selected level of engine demand. Figure 4 shows an engine speed-engine demand characteristic for engine 20. The figure shows the engine speed-engine demand region A for which an available high pressure will be selected by the electronic control unit for engine 20 and gaseous fuel correspondingly supplied to the fuel injectors 9 from first fuel passage 13. The figure also shows the engine speed-engine demand region B for which an available low pressure will be selected by electronic control unit for engine 20 and gaseous fuel correspondingly supplied to the fuel injectors 9 from second fuel passage 14. Figure 4 shows that electronic control unit operates fuel injectors 9 at low pressures from idle up to engine speeds and loads at which high pressure gas is required to increase the injected fuel flow. It will be appreciated that the fuel injection system, operated in accordance with Figure 4 is preferentially operated at low pressure. However, a rapid transition between available high and iow pressures may be achieved when engine speed and load conditions dictate by appropriate actuation of solenoid valves 25 to allow switching between fuel supply available from fuel supply passage 14 and fuel supply passage 13 and vice versa.

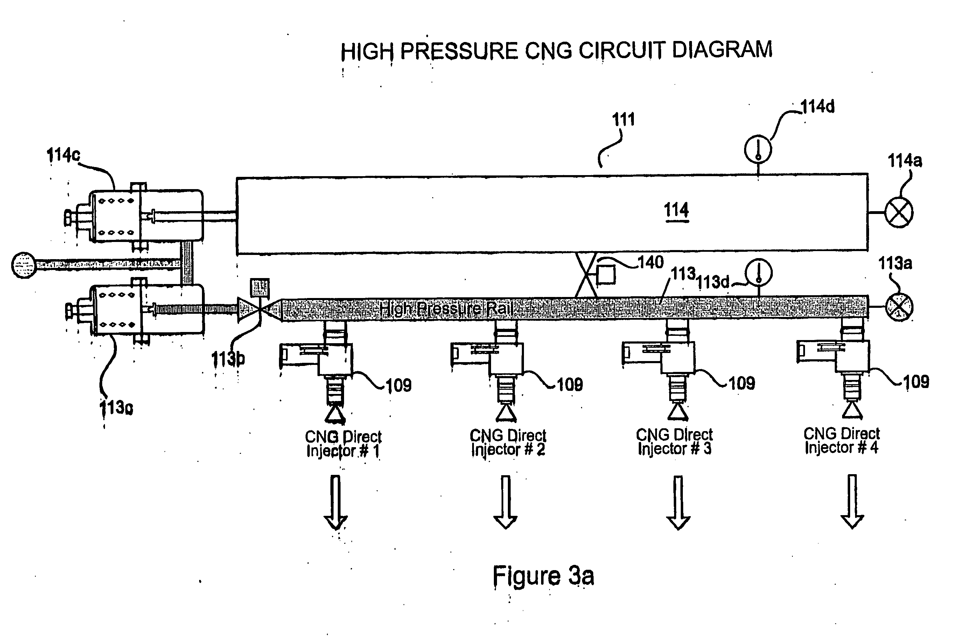

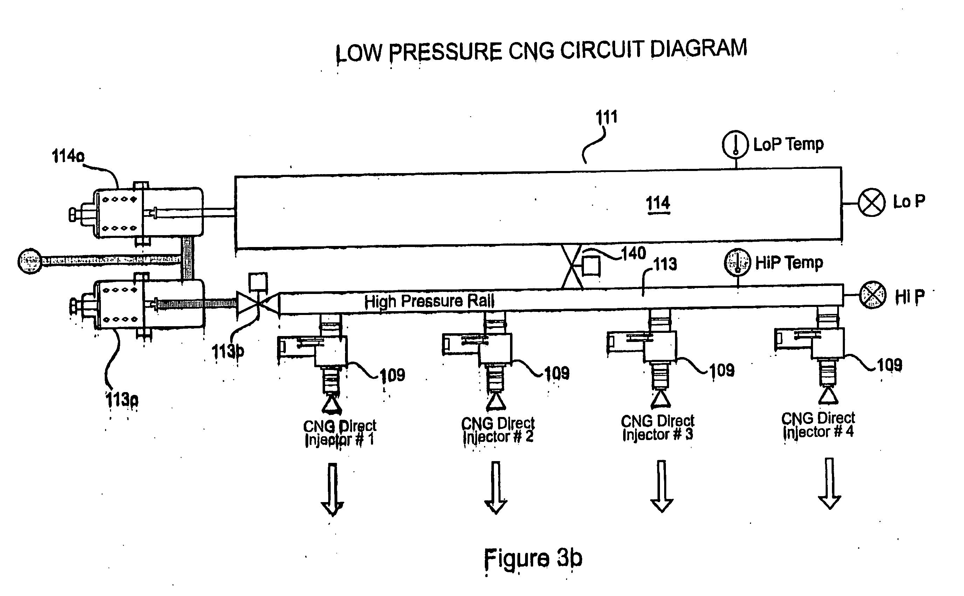

Figure 3 shows a further embodiment of a gaseous direct fuel injection system allowing rapid transition between available high and low pressures. In principle, the fuel injection system resembles that shown in Figure 2. The fuel rail unit 111 includes two fuel supply passages 113 and 114, one fuel supply passage 113 being of lesser volume or capacity than the other fuel supply passage 114. Fuel supply passage 114 is a surging volume which could be of any desired geometry, for example spherical. First fuel supply passage 113 is configured to enable supply of pressurized fuel at high pressure to fuel injectors 109 which are of the same type as fuel injectors 9 described above. Each fuel supply passage 113. and 114 has pressure regulated by pressure regulators 113c and 114c respectively. Pressure and temperature sensors located in each fuel supply passage 113 and 114 provide information enabling the electronic control unit to compensate for pressure and temperature variations in gaseous fuel present in the fuel passages 113 and 114. However, in this embodiment, only fuel supply passage 113 is directly connected with the fuel injectors 109. Fuel is not supplied directly to fuel injectors 109 from second fuel supply passage 114. Fuel supply passages 113 and 114 are connected through a single isolation valve 140 being actuated, in accordance with engine operating conditions, by the electronic control unit. Valve 140 may be a solenoid valve. Plural valves could be provided. When the electronic control unit determines that high pressure gaseous fuel must be supplied to fuel injectors 109, isolation valve 140 is closed. Gaseous fuel in fuel supply passage 114 remains pressurized at a low regulated pressure, for example 1 -20 MPa. High pressure gaseous fuel is then supplied from fuel supply passage 113 to fuel injectors 109 as shown schematically in Figure 3a. The high regulated pressure may, for example, be 2.50 MPa.

When electronic control unit determines that a transition to low pressure operation is required, the available low pressure is achieved in the following manner. Isolation valve 140 opens allowing venting of gaseous fuel from fuel supply passage 113 to fuel supply passage 114. Gas supply from fuel tank 2 to fuel supply passage 113, regulated at high pressure (2.50 MPa) is also ceased at this time by closure of flow control valve 113b. Venting of gas and transition to low pressure operation is rapid in the sense that response time is acceptable or better in the context of engine operation.

During low pressure operation, isolation valve 140 open. Low pressure fuel is supplied to fuel injectors 109 from fuel supply passage 113 as shown schematically in Figure 3h. Then, when the electronic control unit determines that a transition to high pressure operation is required, isolation valve 140 is once again closed. Flow control valve 113b is opened allowing rapid repressurisation of the fuel supply passage 113 to a pressure required for supply of fuel to fuel injectors. 109. Fuel supply at high pressure to fuel injectors 109 is resumed.

The control strategy for the embodiment of fuel injection system shown in Figures 3a and 3b is the same for the fuel injection system of Figures 2a to 2c. That is, the systems are both preferentially operated at low pressure as shown in, and described with reference to, Figure 4. Analogously with the embodiment of Figure 2, actuation of isolation valve 140 and flow control valve 113b may be effected by a suitable engine speed sensor being provided to activate a switch when the engine speed reaches a selected value at a selected level of engine demand.

Modifications and variations to the fuel injection system of the present invention may be apparent to the skilled reader of this disclosure. For example, the fuel injection system for direct injection of fuel to the engine may be supplemented by port injection if desired (refer manifold injector 26 in Figs 1a and 1b). Such modifications and variations are considered to be within the scope of the present disclosure.

## Claims

1. A gaseous direct fuel injection system for a spark ignition internal combustion engine comprising a combustion chamber;
at least one fuel injector for directly injecting gaseous fuel into said combustion chamber,
a fuel supply means for supplying gaseous fuel to said fuel injector; and a control means wherein said fuel supply means further comprises a plurality of volumes corresponding with a plurality of coexisting available fuel supply pressures at at least some operating- points of engine operation for gaseous fuel to be supplied to said at least one fuel injector and the control means selects an available coexisting fuel supply pressure for gaseous fuel to be supplied to said at least one fuel injector as a function of engine operating conditions.

2. The fuel injection system of claim 1 wherein-said volumes of said fuel supply means comprise a plurality of fuel supply passages, each passage having a pressure corresponding with an available fuel supply pressure and first switching means for switching fuel supply from one fuel supply passage to another fuel supply passage dependent on engine operating conditions.

3. The fuel injection system of claim 2 wherein a first fuel supply passage has a pressure regulated at a high pressure and a second fuel supply passage a pressure regulated at a tow pressure.

4. The fuel injection system of claim 3 further comprising a second switching means for switching fuel supply between said fuel supply passage and said fuel injector dependent an engine operating conditions.

5. The fuel injection system of claim 4 wherein said switching means switches fuel supply between said fuel supply passages and said at least one fuel injector dependent on engine load, engine speed or operator demand.

6. The fuel injection system of claim 4 wherein a lowest available pressure is selected such that idle fuel requirement of the engine is delivered within a controllable operating range of said fuel injector.

7. The fuel injection system of any one of the preceding claims wherein said fuel supply means further comprises sensors of properties of said: gaseous fuel, said control means allowing compensation of an injection event dependent on sensed properties,

8. The fuel injection system of any one of claims 2 to 7 wherein said first fuel supply means communicates with said at least one fuel injector and said first and second fuel supply passages are connected by at least one isolation valve of on-off type, said at least one isolation valve being opened to allow venting of fuel and pressure drop in said first fuel supply passage when said control means senses requirement for transition from high pressure to low pressure operation.

9. The fuel injection system of any one of claims 3 to 8 wherein said second fuel supply passage has greater volume than said first fuel supply passage.

10. The fuel injection system of claim 9 as dependent from claim 8 wherein relative volumes of said first and second fuel supply passages are selected such that, on venting of fuel, pressure in said first fuel supply passage falls to a target value.

11. The fuel injection system of any one of the preceding claims wherein said engine is operated in low pressure mode.

12. The fuel injection system of claim 11 wherein said engine is operated in a low pressure "limp home" mode on sensing of an engine fault.

13. The fuel injection system of any one of the preceding claims wherein said control means controls the pressure differential across a fuel injector to effect fuel metering.

14. The fuel injection system of any one of the preceding claims wherein a fuel injector injects at least one of water and an additive into said combustion chamber.

15. The fuel injection system of claim 14 wherein said additive is selected from the group consisting of a gas and a liquid fuel.

16. The fuel injection system of claim 15 wherein said gas is hydrogen.

17. The fuel injection system of any one of the preceding claims further comprising at least one port fuel injector.

18. The fuel injection system of any one of the preceding claims wherein a fuel injector injects a single fluid.

19. The fuel injection system of any one of claims 1 to 17 wherein a fuel injector injects a dual fluid mixture.

20. The fuel injection system of any one of the preceding claims where said volumes are supplied with gaseous fuel from a single fuel tank.

21. A method of operating a spark ignition internal combustion engine directly injected with a gaseous fuel, the engine having a combustion chamber including at least one fuel injector for directly injecting gaseous fuel into said combustion chamber, a fuel supply means for supplying gaseous fuel to the fuel injector and a control means wherein said fuel supply means further comprises a plurality of volumes corresponding with a plurality of coexisting available fuel supply pressures at at least some operating points of the engine for gaseous fuel to be supplied to said at least one fuel injector and said control means selects an available supply pressure for gaseous fuel to be supplied to said at least one fuel injector as a function of engine operating conditions.

22. A method of operating a spark ignition internal combustion engine directly injected with a gaseous fuel, the engine having a combustion chamber including at least one fuel injector for directly injecting gaseous fuel into said combustion chamber, a fuel supply means for supplying gaseous fuel to the fuel injector and a control means wherein said fuel supply means further comprises a plurality of volumes, pressure of said volumes being controlled to provide a plurality of coexisting available fuel supply pressures at at least some operating points of the engine for gaseous fuel to be supplied to said at least one fuel injector, said control means selecting an available fuel supply pressure for gaseous fuel to be supplied to said at least one fuel injector as a function of engine operating conditions.

23. An engine comprising the fuel injection system of any one of the preceding claims.

## Patentansprüche

1. Direkteinspritzsystem für gasförmigen Brennstoff für einen Verbrennungsmotor mit elektrischer Zündung, umfassend eine Verbrennungskammer;
mindestens einen Brennstoffeinspritzer zum direkten Einspritzen von gasförmigem Brennstoff in die Verbrennungskammer;
ein Brennstoffzuführungsmittel zum Zuführen von gasförmigem Brennstoff zu dem Brennstoffeinspritzer; und ein Steuermittel, wobei das Brennstoffzuführungsmittel weiter eine Vielzahl von Volumen umfasst, die mit einer Vielzahl von koexistierenden verfügbaren Brennstoffzuführungsdrücken bei mindestens einigen Operationspunkten der Motoroperation für gasförmigen Brennstoff, der dem mindestens einen Brennstoffeinspritzer zuzuführen ist, korrespondieren, und das Steuermittel einen verfügbaren koexistierenden Brennstoffzuführungsdruck für gasförmigen Brennstoff, der dem mindestens einen Brennstoffeinspritzer zuzuführen ist, als eine Funktion der Motoroperationsbedingungen auswählt.

2. Brennstoffeinspritzsystem nach Anspruch 1, wobei die Volumen des Brennstoffzuführungsmittels eine Vielzahl von Brennstoffzuführungskanälen umfasst, wobei jeder Kanal einen Druck, der mit einem verfügbaren Brennstoffzuführungsdruck korrespondiert, und ein erstes Umschaltmittel zum Umschalten der Brennstoffzuführung von einem Brennstoffzuführungskanal zu einem anderen Brennstoffzuführungskanal in Abhängigkeit von den Motoroperationsbedingungen aufweist.

3. Brennstoffeinspritzsystem nach Anspruch 2, wobei ein erster Brennstoffzuführungskanal einen Druck aufweist, der auf einem hohen Druck reguliert ist, und ein zweiter Brennstoffzuführungskanal einen Druck aufweist, der auf einem niedrigen Druck reguliert ist.

4. Brennstoffeinspritzsystem nach Anspruch 3, weiter umfassend ein zweites Umschaltmittel zum Umschalten der Brennstoffzuführung zwischen den Brennstoffzuführungskanälen und dem Brennstoffeinspritzer in Abhängigkeit von den Motoroperationsbedingungen.

5. Brennstoffeinspritzsystem nach Anspruch 4, wobei das Umschaltmittel die Brennstoffzuführung zwischen den Brennstoffzuführungskanälen und dem mindestens einen Brennstoffeinspritzer in Abhängigkeit von Motorlast, Motordrehzahl und Operatoranforderung umschaltet.

6. Brennstoffeinspritzsystem nach Anspruch 4, wobei ein niedrigster verfügbarer Druck derart ausgewählt wird, dass der Leerlauf-Brennstoffbedarf des Motors innerhalb eines steuerbaren Operationsbereichs des Brennstoffeinspritzers geliefert wird.

7. Brennstoffeinspritzsystem nach einem der vorstehenden Ansprüche, wobei das Brennstoffzuführungsmittel weiter Sensoren für Eigenschaften des gasförmigen Brennstoffs umfasst, wobei das Steuermittel Kompensation eines Einspritzereignisses in Abhängigkeit von den erfassten Eigenschaften gestattet.

8. Brennstoffeinspritzsystem nach einem der Ansprüche 2 bis 7, wobei das erste Brennstoffzuführungsmittel mit dem mindestens einen Brennstoffeinspritzer kommuniziert und der erste und zweite Brennstoffzuführungskanal durch mindestens ein Sperrventil in Ein/Aus-Ausführung verbunden sind, wobei das mindestens eine Sperrventil geöffnet wird, um Ablassen von Brennstoff und Druckabfall in dem ersten Brennstoffzuführungskanal zu gestatten, wenn das Steuermittel das Erfordernis für Übergang von Hochdruck- zu Niedrigdruck-Operation erfasst.

9. Brennstoffeinspritzsystem nach einem der Ansprüche 3 bis 8, wobei der zweite Brennstoffzuführungskanal ein größeres Volumen als der erste Brennstoffzuführungskanal aufweist.

10. Brennstoffeinspritzsystem nach Anspruch 9 in Abhängigkeit von Anspruch 8, wobei relative Volumen des ersten und zweiten Brennstoffzuführungskanals derart ausgewählt werden, dass beim Ablassen von Brennstoff der Druck in dem ersten Brennstoffzuführungskanal auf einen Zielwert fällt.

11. Brennstoffeinspritzsystem nach einem der vorstehenden Ansprüche, wobei der Motor in einem Niedrigdruckmodus operiert wird.

12. Brennstoffeinspritzsystem nach Anspruch 11, wobei der Motor bei Erfassen eines Motorfehlers in einem Niedrigdruck-"Notlaufbetrieb"-Modus operiert wird.

13. Brennstoffeinspritzsystem nach einem der vorstehenden Ansprüche, wobei das Steuermittel den Druckunterschied über einem Brennstoffeinspritzer steuert, um Brennstoffdosierung zu bewirken.

14. Brennstoffeinspritzsystem nach einem der vorstehenden Ansprüche, wobei ein Brennstoffeinspritzer mindestens eines von Wasser und eines Zusatzes in die Verbrennungskammer einspritzt.

15. Brennstoffeinspritzsystem nach Anspruch 14, wobei der Zusatz aus der Gruppe ausgewählt wird, die aus einem Gas- und einem Flüssigbrennstoff besteht.

16. Brennstoffeinspritzsystem nach Anspruch 15, wobei das Gas Wasserstoff ist.

17. Brennstoffeinspritzsystem nach einem der vorstehenden Ansprüche, weiter umfassend mindestens einen Saugrohr-Brennstoffeinspritzer.

18. Brennstoffeinspritzsystem nach einem der vorstehenden Ansprüche, wobei ein Brennstoffeinspritzer eine einzelne Flüssigkeit einspritzt.

19. Brennstoffeinspritzsystem nach einem der Ansprüche 1 bis 17, wobei ein Brennstoffeinspritzer eine Mischung aus zwei Flüssigkeiten einspritzt.

20. Brennstoffeinspritzsystem nach einem der vorstehenden Ansprüche, wobei den Volumen gasförmiger Brennstoff aus einem einzelnen Brennstofftank zugeführt wird.

21. Verfahren zum Operieren eines Verbrennungsmotors mit elektrischer Zündung, dem ein gasförmiger Brennstoff direkt eingespritzt wird, wobei der Motor eine Verbrennungskammer aufweist, die mindestens einen Brennstoffeinspritzer zum direkten Einspritzen eines gasförmigen Brennstoffs in die Verbrennungskammer, ein Brennstoffzuführungsmittel zum Zuführen von gasförmigen Brennstoff zu dem Brennstoffeinspritzer und ein Steuermittel enthält, wobei das Brennstoffzuführungsmittel weiter eine Vielzahl von Volumen umfasst, die mit einer Vielzahl von koexistierenden verfügbaren Brennstoffzuführungsdrücken bei mindestens einigen Operationspunkten des Motors für gasförmigen Brennstoff, der dem mindestens einen Brennstoffeinspritzer zuzuführen ist, korrespondieren, und das Steuermittel einen verfügbaren Zuführungsdruck für gasförmigen Brennstoff, der dem mindestens einen Brennstoffeinspritzer zuzuführen ist, als eine Funktion der Motoroperationsbedingungen auswählt.

22. Verfahren zum Operieren eines Verbrennungsmotors mit elektrischer Zündung, dem ein gasförmiger Brennstoff direkt eingespritzt wird, wobei der Motor eine Verbrennungskammer aufweist, die mindestens einen Brennstoffeinspritzer zum direkten Einspritzen eines gasförmigen Brennstoffs in die Verbrennungskammer, ein Brennstoffzuführungsmittel zum Zuführen von gasförmigen Brennstoff zu dem Brennstoffeinspritzer und ein Steuermittel enthält, wobei das Brennstoffzuführungsmittel weiter eine Vielzahl von Volumen umfasst, wobei Drücke der Volumen gesteuert werden, um eine Vielzahl von koexistierenden verfügbaren Brennstoffzuführungsdrücken bei mindestens einigen Operationspunkten des Motors für gasförmigen Brennstoff, der dem mindestens einen Brennstoffeinspritzer zuzuführen ist, bereitzustellen, wobei das Steuermittel einen verfügbaren Brennstoffzuführungsdruck für gasförmigen Brennstoff, der dem mindestens einen Brennstoffeinspritzer zuzuführen ist, als eine Funktion der Motoroperationsbedingungen auswählt.

23. Motor, umfassend des Brennstoffeinspritzsystem nach einem der vorstehenden Ansprüche.

## Revendications

1. Système d'injection directe de carburant gazeux pour un moteur à combustion interne à allumage commandé comprenant une chambre de combustion ;
au moins un injecteur de carburant pour injecter directement du carburant gazeux dans ladite chambre de combustion ;
un moyen d'alimentation en carburant pour alimenter du carburant gazeux audit injecteur de carburant ; et un moyen de commande, ledit moyen d'alimentation en carburant comprenant en outre une pluralité de volumes correspondant à une pluralité de pressions d'alimentation en carburant disponibles coexistantes à au moins certains stades de fonctionnement du moteur pour l'alimentation de carburant gazeux audit au moins injecteur de carburant et le moyen de commande sélectionnant une pression d'alimentation de carburant coexistante disponible pour l'alimentation de carburant gazeux audit au moins injecteur de carburant en fonction des conditions de fonctionnement du moteur.

2. Système d'injection de carburant selon la revendication 1, dans lequel lesdits volumes dudit moyen d'alimentation en carburant comprennent une pluralité de passages d'alimentation en carburant, chaque passage ayant une pression correspondant à une pression d'alimentation en carburant disponible et un premier moyen de permutation pour permuter l'alimentation en carburant d'un passage d'alimentation en carburant à un autre passage d'alimentation en carburant selon les conditions de fonctionnement du moteur.

3. Système d'injection de carburant selon la revendication 2, dans lequel un premier passage d'alimentation en carburant a une pression régulée à une haute pression et un deuxième passage d'alimentation en carburant a une pression régulée à une basse pression.

4. Système d'injection de carburant selon la revendication 3, comprenant en outre un deuxième moyen de permutation pour permuter l'alimentation en carburant entre lesdits passages d'alimentation en carburant et ledit injecteur de carburant selon les conditions de fonctionnement du moteur.

5. Système d'injection de carburant selon la revendication 4, dans lequel ledit moyen de permutation permute l'alimentation en carburant entre lesdits passages d'alimentation en carburant et ledit au moins un injecteur de carburant selon la charge du moteur, la vitesse du moteur ou la demande de l'opérateur.

6. Système d'injection de carburant selon la revendication 4, dans lequel une pression disponible la plus basse est sélectionnée de manière à ce que les besoins en carburant du moteur au ralenti soient remplis dans les limites d'une gamme de fonctionnement contrôlable dudit injecteur de carburant.

7. Système d'injection de carburant selon l'une quelconque des revendications précédentes, dans lequel ledit moyen d'alimentation en carburant comprend en outre des capteurs des propriétés dudit carburant gazeux, ledit moyen de commande permettant une compensation d'un évènement d'injection selon les propriétés détectées.

8. Système d'injection de carburant selon l'une quelconque des revendications 2 à 7, dans lequel ledit premier moyen d'alimentation en carburant communique avec ledit au moins injecteur de carburant et lesdits premier et deuxième passages d'alimentation en carburant sont reliés par au moins une vanne d'isolation du type tout ou rien, ladite au moins une vanne d'isolation étant ouverte pour permettre l'évacuation de carburant et une chute de pression dans ledit premier passage de carburant lorsque ledit moyen de commande détecte un besoin de transition du fonctionnement à haute pression au fonctionnement à basse pression.

9. Système d'injection de carburant selon l'une quelconque des revendications 3 à 8, dans lequel ledit deuxième passage d'alimentation en carburant a un volume plus grand que ledit premier passage d'alimentation en carburant.

10. Système d'injection de carburant selon la revendication 9 dépendante de la revendication 8, dans lequel les volumes relatifs desdits premier et deuxième passages d'alimentation en carburant sont sélectionnés de manière à ce que, lors de l'évacuation de carburant, la pression dans ledit premier passage d'alimentation en carburant tombe à une valeur cible.

11. Système d'injection de carburant selon l'une quelconque des revendications précédentes, dans lequel ledit moteur fonctionne dans une mode à basse pression.

12. Système d'injection de carburant selon la revendication 11, dans lequel ledit moteur fonctionne dans un mode dégradé à basse pression lors de la détection d'un défaut du moteur.

13. Système d'injection de carburant selon l'une quelconque des revendications précédentes, dans lequel ledit moyen de commande contrôle la différence de pression de part et d'autre d'un injecteur de carburant pour effectuer le dosage du carburant.

14. Système d'injection de carburant selon l'une quelconque des revendications précédentes, dans lequel un injecteur de carburant injecte au moins soit de l'eau, soit un additif dans ladite chambre de combustion.

15. Système d'injection de carburant selon la revendication 14, dans lequel ledit additif est sélectionné parmi le groupe consistant en un gaz et un carburant liquide.

16. Système d'injection de carburant selon la revendication 15, dans lequel ledit gaz est de l'hydrogène.

17. Système d'injection de carburant selon l'une quelconque des revendications précédentes, comprenant en outre au moins un injecteur de carburant à orifice.

18. Système d'injection de carburant selon l'une quelconque des revendications précédentes, dans lequel un injecteur de carburant injecte un seul fluide.

19. Système d'injection de carburant selon l'une quelconque des revendications 1 à 17, dans lequel un injecteur de carburant injecte un mélange de deux fluides.

20. Système d'injection de carburant selon l'une quelconque des revendications précédentes, dans lequel lesdits volumes sont alimentés en carburant gazeux à partir d'un seul réservoir de carburant.

21. Procédé de fonctionnement d'un moteur à combustion interne à allumage commandé injecté directement avec un carburant gazeux, ce moteur ayant une chambre de combustion comprenant au moins un injecteur de carburant pour injecter directement du carburant gazeux dans ladite chambre de combustion, un moyen d'alimentation en carburant pour alimenter du carburant gazeux à l'injecteur de carburant et un moyen de commande, dans lequel ledit moyen d'alimentation en carburant comprend en outre une pluralité de volumes correspondant à une pluralité de pressions d'alimentation en carburant disponibles coexistantes à au moins certains stades de fonctionnement du moteur pour l'alimentation de carburant gazeux audit au moins un injecteur de carburant et ledit moyen de commande sélectionne une pression d'alimentation disponible pour l'alimentation de carburant gazeux audit au moins un injecteur de carburant en fonction des conditions de fonctionnement du moteur.

22. Procédé de fonctionnement d'un moteur à combustion interne à allumage commandé injecté directement avec un carburant gazeux, ce moteur ayant une chambre de combustion comprenant au moins un injecteur de carburant pour injecter directement du carburant gazeux dans ladite chambre de combustion, un moyen d'alimentation en carburant pour alimenter du carburant gazeux à l'injecteur de carburant et un moyen de commande, dans lequel ledit moyen d'alimentation en carburant comprend en outre une pluralité de volumes, la pression desdits volumes étant contrôlée pour fournir une pluralité de pressions d'alimentation en carburant disponibles coexistantes à au moins certains stades de fonctionnement du moteur pour l'alimentation de carburant gazeux audit au moins un injecteur de carburant, ledit moyen de commande sélectionnant une pression d'alimentation en carburant disponible pour l'alimentation de carburant gazeux audit au moins un injecteur de carburant en fonction des conditions de fonctionnement du moteur.

23. Moteur comprenant le système d'injection de carburant selon l'une quelconque des revendications précédentes.
